# EUROPÄISCHE PATENTANMELDUNG

(11) **EP 2 413 648 A1**
(43) Veröffentlichungstag der Anmeldung: **01.02.2012**
(21) Anmeldenummer: 10171429.3
(22) Anmeldetag: 30.07.2010
(51) Int. Cl.: H04W 64/00, H04L 12/24, H04W 84/12, H04L 12/28, G01S 5/02, G01S 11/06

(54) **Lokalisieren von Informations- und Kommunikations-Endgeräten zum Erzeugen einer lokalen Arbeits- und Netzwerkumgebung in einer erweiterten Virtualität mit einem Computersystem**

(71) Anmelder: Deutsche Telekom AG, 53113 Bonn (DE)
(72) Erfinder: Büttner, Friedrich, 70825, Korntal (DE)
(74) Vertreter: Bucher, Ralf Christian

(57) **Zusammenfassung**

Die Erfindung betrifft Verfahren zum Lokalisieren von ICT-Endgeräten zum Erzeugen einer lokalen Arbeits- und Netzwerkumgebung in einer erweiterten Virtualität mit einem Computersystem mit den Schritten:
• Erzeugen und Aussenden eines Suchsignals für ICT-Endgeräte (S10);
• Empfangen von Datensätzen mit realen Positionen von einem oder mehreren ICT-Endgeräten als Antwort auf das Suchsignal (S12),
• Erzeugen einer virtuellen Darstellung einer lokalen Arbeits- und Netzwerkumgebung durch Anordnen von Repräsentationen der ICT-Endgeräte entsprechend ihrer realen Positionen in der virtuellen Darstellung (S14) und
• Übertragen der erzeugten virtuellen Darstellung auf eine mit dem Computersystem verbundene Anzeigeeinrichtung zum Darstellen (S16).

## Beschreibung

Die Erfindung betrifft ein Verfahren zum Lokalisieren von ICT-Endgeräten zum Erzeugen einer lokalen Arbeits- und Netzwerkumgebung in einer erweiterten Virtualität mit einem Computersystem gemäß Anspruch 1, ein Verfahren zum Erzeugen und Übertragen einer Antwort auf ein Suchsignal für ICT-Endgeräte gemäß Anspruch 6 und eine Funk-Zugangsvorrichtung für ICT-Endgeräte zu einem Netzwerk gemäß Anspruch 11.

Moderne Betriebssysteme besitzen grafische Benutzerschnittstellen (GUI: Graphical User Interface) zu komfortablen Bedienung eines Computersystems. Diese GUIs können auch die lokale Arbeits- und Netzwerkumgebung darstellen, insbesondere mit einem Computer gekoppelte oder in ein Netzwerk wie beispielsweise ein LAN (Local Area Network) oder ein WLAN (Wireless Local Area Network) eingebundene ICT (Information & Communication Technology)-Endgeräte wie Mobiltelefone, Smartphones, PDAs (Personal Digital Assistants), (Netzwerk-)Drucker, (Netzwerk-)Projektoren, Notebook-, Laptop-, Desktop-, Server- oder Tablet-Computer. Bei der grafischen Darstellung der lokalen Arbeits- und Netzwerkumgebung werden lokale Ressourcen und erkannte ICT-Endgeräte im Netzwerk in der Regel listenförmig dargestellt, da in der Regel keine Informationen über die Netzwerk-Topologie vorhanden ist.

Zur Erkennung der Netzwerk-Topologie ist das LLTD (Link Layer Topology Discovery)-Protokoll von MicroSoft™ bekannt, das in den Betriebssystemen Windows™ Vista™ und Windows™ 7 implementiert ist und eine grafische Darstellung von ICT-Endgeräten und der Netzwerk-Topologie in einem Windows™-Netzwerk ermöglicht. Ebenso ermöglicht LLDP (Link Layer Discovery Protocol) oder das IEEE 802.1AB-Prokoll die Ermittlung der Topologie eines Netzwerks von ICT-Endgeräten. Durch LLDP werden Informationen von ICT-Endgeräten in einem Netzwerk gesammelt und in einer Management Information Database (MIB) gespeichert. Unter Verwendung von dem in RFC 2922 der Internet Society (ISOC) spezifizierten SNMP (Simple Network Management Protocol) können Informationen aus der Datenbank abgefragt und beispielsweise zum Ermitteln der Topologie eines Netzwerks verwendet werden. Die Netzwerk-Topologie gibt zumindest Auskunft über die Vernetzung, d.h. wie ICT-Endgeräte miteinander vernetzt sind, was beispielsweise bei Netzwerkproblemen hilfreich sein kann.

Aufgabe der vorliegenden Erfindung ist es nun, das Lokalisieren von ICT-Endgeräten zum Erzeugen einer lokalen Arbeits- und Netzwerkumgebung zu verbessern.

Diese Aufgabe wird durch ein Verfahren zum Lokalisieren von ICT-Endgeräten zum Erzeugen einer lokalen Arbeits- und Netzwerkumgebung mit den Merkmalen gemäß Anspruch 1, ein Verfahren zum Erzeugen und Übertragen einer Antwort auf ein Suchsignal für ICT-Endgeräte mit den Merkmalen von Anspruch 6 und eine Funk-Zugangsvorrichtung für ICT-Endgeräte zu einem Netzwerk mit den Merkmalen gemäß Anspruch 11 gelöst. Weitere Ausgestaltungen der Erfindung ergeben sich aus den abhängigen Ansprüchen.

Nach der Erfindung werden als Antwort auf ein Suchsignal für ICT-Endgeräte wie beispielsweise ein Smartphone oder ein Tablet-Computer Datensätze mit realen Positionen von ICT-Endgeräten empfangen. Eine reale Position eines Endgeräts bedeutet hierin beispielsweise einen Satz mit Koordinaten in einem bestimmten Koordinatensystem. Die reale Position kann in etwa die tatsächliche Position des zugehörigen ICT-Endgeräts oder auch eine relative Position in Bezug auf einen Bezugspunkt angeben, beispielsweise ein anderes ICT-Endgerät. Beispielsweise kann ein ICT-Endgerät als reale Position eine Position übertragen, die mittels eines Positionierungssystems wie beispielsweise einem GNSS (Global Navigation Satellite System) ermittelt wurde, oder ein Drahtlos-Router kann durch Triangulation die relative Position von mit ihm per Funk kommunizierenden ICT-Endgeräten abschätzen. Die reale Position eines ICT-Endgeräts kann nach der Erfindung dazu genutzt werden, eine virtuelle Darstellung einer lokalen Arbeits- und Netzwerkumgebung zu erzeugen, in der erkannte ICT-Endgeräte entsprechend ihrer realen Position angeordnet werden. Dadurch kann eine lokale Arbeits- und Netzwerkumgebung in einer erweiterten Virtualität mit einem Computersystem erzeugt werden, mit der die Lokalisierung von ICT-Endgeräten erleichtert werden kann, was insbesondere die Lokalisierung von Netzwerkproblemen erleichtert, aber auch beim Übermitteln von Daten an ein ICT-Endgerät hilfreich sein kann, von dem nur seine relative Position bekannt ist.

Eine Ausführungsform der Erfindung betrifft ein Verfahren zum Lokalisieren von ICT-Endgeräten zum Erzeugen einer lokalen Arbeits- und Netzwerkumgebung in einer erweiterten Virtualität mit einem Computersystem mit den Schritten:
Erzeugen und Aussenden eines Suchsignals für ICT-Endgeräte;
Empfangen von Datensätzen mit realen Positionen von einem oder mehreren ICT-Endgeräten als Antwort auf das Suchsignal,
Erzeugen einer virtuellen Darstellung einer lokalen Arbeits- und Netzwerkumgebung durch Anordnen von Repräsentationen der ICT-Endgeräte entsprechend ihrer realen Positionen in der virtuellen Darstellung und
Übertragen der erzeugten virtuellen Darstellung auf eine mit dem Computersystem verbundene Anzeigeeinrichtung zum Darstellen.
Die virtuelle Darstellung entspricht einer erweiterten Virtualität, da Information der Realität, die realen Positionen von ICT-Endgeräten in eine virtuelle Oberfläche bzw. Darstellung integriert werden. Durch eine solche virtuelle Darstellung kann beispielsweise die Interaktion zwischen ICT-Endgeräten oder auch die Lokalisierung von Netzwerkproblemen erleichtert werden.

Das Anordnen von Repräsentationen der ICT-Endgeräte entsprechend ihrer realen Positionen kann folgende Schritte aufweisen:
Zuordnen einer virtuellen Position in der virtuellen Darstellung der lokalen Arbeits- und Netzwerkumgebung zur realen Position des Computersystems,
Zuordnen einer virtuellen Position in der virtuellen Darstellung einer lokalen Arbeits- und Netzwerkumgebung zu einer realen Position eines ICT-Endgeräts abhängig von der dem Computersystem zugeordneten virtuellen Position und
Anordnen einer Repräsentation des Computersystems und von Repräsentationen von ICT-Endgeräten an den jeweils zugeordneten virtuellen Positionen in der virtuellen Darstellung der lokalen Arbeits- und Netzwerkumgebung.
Beispielsweise kann das Computersystem in der virtuellen Darstellung zentral angeordnet werden, und ICT-Endgeräte können relativ zum zentral angeordneten Computersystem entsprechend ihrer jeweiligen realen Position angeordnet werden, so dass ein Benutzer des Computersystems anhand der virtuellen Darstellung ein ICT-Endgerät relativ einfach lokalisieren kann. Eine derartige virtuelle Darstellung der lokalen Arbeits- und Netzwerkumgebung ermöglicht eine einfache Interaktion zwischen Besitzern der ICT-Endgeräte. Vor allem bei mehr als zwei ICT-Endgeräten ist diese Darstellungsform hilfreich, da sie die Übersicht und Zuordnung erleichtert. Ein weiterer Vorteil besteht darin, dass ein Nutzer kein aufwendiges Authentisieren anderer ICT-Endgeräte durchführen muss, da er ein in der virtuellen Darstellung angezeigtes ICT-Endgerät beispielsweise einer Person in einem Raum zuordnen kann, ohne die Person oder das Gerät zu kennen.

Das Anordnen von Repräsentationen der ICT-Endgeräte an ihren jeweils zugeordneten virtuellen Positionen kann ferner folgende Schritte aufweisen: Ermitteln des Abstands zwischen der realen Position des Computersystems und der ermittelten realen Position eines ICT-Endgeräts und
Anpassen der Größe der Repräsentation des ICT-Endgeräts abhängig vom ermittelten Abstand.
Dadurch kann ein Benutzer leicht erkennen, wie weit ein ICT-Endgerät ungefähr vom Computersystem entfernt ist, und leichter ein ICT-Endgerät identifizieren, mit dem beispielsweise eine Kommunikationsverbindung aufgebaut werden soll.

Das Verfahren kann ferner durch folgende Schritte gekennzeichnet sein: Empfangen einer Kennung eines ICT-Endgeräts als Antwort auf das Suchsignal durch das Computersystem,
Ermitteln des Typs des ICT-Endgeräts anhand der übertragenen Kennung und
Auswählen einer Repräsentation des ICT-Endgeräts in der virtuellen Darstellung der lokalen Arbeits- und Netzwerkumgebung anhand des ermittelten Typs des ICT-Endgeräts.
Anhand der übertragenen Kennung können beispielsweise Smartphones von Tablet-Computern und Notebooks unterschieden und dies bei der Anzeige des entsprechenden ICT-Endgeräts in der virtuellen Darstellung berücksichtigt werden. Weiterhin kann das Verfahren durch die folgenden Schritte gekennzeichnet sein:
Empfangen einer Benutzereingabe zum Übertragen von digitalen Daten von einem ersten ICT-Endgerät zu einem zweiten ICT-Endgerät durch Auswählen des ersten ICT-Endgeräts und des zweiten ICT-Endgeräts in der virtuellen Darstellung der lokalen Arbeits- und Netzwerkumgebung,
Auswählen einer oder mehrerer Kommunikationsverbindungen zwischen den beiden ICT-Endgeräten zur Übertragung der digitalen Daten anhand der virtuellen Darstellung und
Initiieren der Übertragung der digitalen Daten vom ersten zum zweiten ICT-Endgerät durch Signalisieren der ausgewählten Kommunikationsverbindungen.
Die Benutzereingabe kann beispielsweise eine "Drag and Drop"-Bedienung sein, bei welcher ein Benutzer eine Datei von einem in der virtuellen Darstellung angezeigten ICT-Endgerät auf ein anderes ICT-Endgerät "zieht". Dann können automatisch eine oder mehrere Kommunikationsverbindungen zwischen den beiden ICT-Endgeräten ausgewählt werden. Beispielsweise kann eine direkte Kommunikationsverbindung zwischen beiden ICT-Endgeräten, oder zwei Kommunikationsverbindungen über ein drittes ICT-Endgerät als Zwischenstation ausgewählt werden, abhängig von der Netzwerk-Topologie und der möglichen Kommunikationsverbindungen. Die Übertragung der eigentlichen Daten kann schließlich durch Signalisieren der ausgewählten Kommunikationsverbindungen initiiert werden, beispielswiese indem das Computersystem, an dem die Benutzereingabe empfangen wurde und die Kommunikationsverbindungen ausgewählt wurden, an das sendende ICT-Endgerät eine den ausgewählten Kommunikationsverbindungen entsprechende Route übermittelt.

Die Erfindung betrifft in einer Ausführungsform ferner ein Verfahren zum Erzeugen und Übertragen einer Antwort auf ein Suchsignal für ICT-Endgeräte, das von einem Computersystem erzeugt und ausgesendet wurde, das ein Verfahren nach einem der vorhergehenden Ansprüche ausführt, gekennzeichnet durch die folgenden Schritte:
Empfangen eines Suchsignals für ICT-Endgeräte ,
Ermitteln der realen Position eines ICT-Endgeräts,
Erzeugen eines Datensatzes mit der ermittelten realen Position und
Übertragen des erzeugten Datensatzes als Antwort auf das Suchsignal für ICT-Endgeräte.
Dieses Verfahren ist insbesondere zum Ausführen durch ein ICT-Endgerät oder ein Gerät vorgesehen, das speziell zum Einsatz mit dem erfindungsgemäßen Verfahren zum Lokalisieren von ICT-Endgeräten vorgesehen ist. Das Verfahren kann beispielsweise in Form einer Softwarekomponente ein Betriebssystem eines Computers um die erfindungsgemäße Funktionalität erweitern und zum Einsatz mit dem erfindungsgemäßen Verfahren zum Lokalisieren von ICT-Endgeräten konfigurieren, oder eine Firmware eines Drahtlos-Routers erweitern, so dass der Drahtlos-Router beispielsweise eine Datenbank mit realen Positionen der mit ihm kommunizierenden ICT-Endgeräte für ein Computersystem bereitstellen kann, welches das erfindungsgemäße Verfahren ausführt. Die Softwarekomponente kann beispielsweise zum Herunterladen auf einer Webseite im Internet angeboten werden.

Das Ermitteln der realen Position eines ICT-Endgeräts kann folgende Schritte aufweisen:
Messen der Empfangsfeldstärke des Funksignals eines ICT-Endgeräts an mehreren unterschiedlichen Positionen in einem Raum,
Abschätzen der Entfernung zum ICT-Endgerät für jede gemessene Empfangsfeldstärke und
Ermitteln der realen Position des ICT-Endgeräts anhand der geschätzten Entfernungen.

Eine Ausführungsform der Erfindung betrifft ferner ein Computerprogramm mit Programmcode zur Durchführung der Schritte eines Verfahrens gemäß der Erfindung, wenn das Computerprogramm auf einem Computer, insbesondere einem ICT-Endgerät, abläuft. Das Computerprogramm kann beispielsweise ein neues Protokoll zum Lokalisieren von ICT-Endgeräten in einem Betriebssystem implementieren, beispielsweise in Form einer zusätzlichen Netzwerkfunktionalität. Ferner kann das Programm beispielsweise bestehende Programme zum Darstellen einer lokalen Arbeits- und Netzwerkumgebung durch eine erweiterte Virtualität erweitern und/oder ein eigenständiges Programm zum Darstellen der lokalen Arbeits- und Netzwerkumgebung in einer erweiterten Virtualität auf einem Computersystem bereitstellen.

Eine weitere Ausführungsform der Erfindung betrifft ein Computerprogramm-Produkt, umfassend einen maschinenlesbaren Datenträger, auf dem ein Computerprogramm nach der Erfindung in Form von elektronisch oder optisch auslesbaren Steuersignalen für einen Computer, insbesondere ein ICT-Endgerät, gespeichert ist.

Eine weitere Ausführungsform der Erfindung betrifft ein ICT-Endgerät, insbesondere Laptop, Notebook, Smartphone oder Tablet-PC, mit
einem Prozessor,
einem Speicher und
einem Computerprogramm, das zum Ausführen durch den Prozessor im Speicher gespeichert ist und ein Verfahren nach der Erfindung implementiert. Das ICT-Endgerät kann durch das erfindungsgemäße Verfahren derart konfiguriert werden, dass es Suchsignale entsprechend dem erfindungsgemäßen Verfahren aussendet und auf die Suchsignale antwortende ICT-Endgeräte in einer erweiterten Virtualität auf seiner Anzeige darstellen kann. Alternativ oder zusätzlich kann das ICT-Endgerät durch das erfindungsgemäße Verfahren auch derart konfiguriert sein, dass es auf Suchsignale entsprechend dem erfindungsgemäßen Verfahren antwortet und seine realen Positionsdaten übermittelt, die es beispielsweise mittels eines (integrierten) GNSS wie aGPS (assisted Global Positioning System), Mobilfunk (GSM, UMTS, 3g, 3.5G, 4G, CDMA), WLAN (Wi-Fi™) , Bluetooth®, Ethernet, RFID (Radio Frequency Identification) etc. selbst ermittelt hat oder die ihm zugeführt worden sind. Zur Ermittlung seiner eigenen realen Position kann sich das ICT-Endgerät beispielsweise auch Funktionalitäten bekannter Programme bedienen, wie beispielsweise Google™ Maps oder GNSS-Navigationssoftware, sofern diese Programme die realen Positionsdaten über beispielsweise eine Schnittstelle anderen Programmen zur Verfügung stellen können.

Schließlich betrifft eine Ausführungsform der Erfindung eine Funk-Zugangsvorrichtung für ICT-Endgeräte zu einem Netzwerk mit
mehreren Antennen zum Kommunizieren mit ICT-Endgeräten per Funkverbindung,
einem Prozessor,
einem Speicher, und einem Computerprogramm, das zum Ausführen durch den Prozessor im Speicher gespeichert ist und folgende Schritte implementiert:
Messen der Empfangsfeldstärke eines Funksignals von einem mit der Funk-Zugangsvorrichtung kommunizierenden ICT-Endgerät mit den Antennen,
Abschätzen der Entfernung zum ICT-Endgerät für jede gemessene Empfangsfeldstärke,
Ermitteln der realen Position des ICT-Endgeräts anhand der geschätzten Entfernungen, und
Übermitteln der ermittelten realen Position des ICT-Endgeräts als Antwort auf ein Suchsignal für ICT-Endgeräte, das von einem Computersystem empfangen wurde, das zum Ausführen eines Verfahrens nach der Erfindung eingerichtet ist.
Die Funk-Zugangsvorrichtung kann beispielsweise ein IAD (Internet Access Device) wie beispielsweise ein Router mit integriertem DSL (Digital subscriber Line)-, Kabel- oder Mobilfunk-Modem sein, das ICT-Endgeräten ermöglicht, auf das Internet zuzugreifen. Ebenso kann die Funk-Zugangsvorrichtung ein Router mit Funkmodul oder Drahtlos-Zugangspunkt in einem Netzwerk, beispielsweise einem Büronetzwerk, sein. Die Funk-Zugangsvorrichtung kann auch derart eingerichtet sein, dass sie die Daten über die realen Positionen aller mit ihr verbundener ICT-Endgeräte in einem Datensatz zusammenfasst und ein anforderndes ICT-Endgerät als lokales Umgebungsbild übermittelt. Diese Funktionalität kann beispielsweise durch eine entsprechend modifizierte Firmware in Funk-Zugangsvorrichtungen wie IADs oder Router nachgerüstet werden. Die Funk-Zugangsvorrichtung kann insbesondere drei Antennen aufweisen, wie sie bei Drahtlos-Routern und -Zugangspunkten nach dem IEEE 802.11n-WLAN-Standard häufig eingesetzt werden, und durch Triangulation die reale Position eines ICT-Endgeräts in Bezug auf seine eigene Position abschätzen. Es können aber auch drei oder mehr Drahtlos-Zugangspunkte der Funk-Zugangsvorrichtung vorgesehen sein, um eine Triangulation durchführen zu können.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1A und 1B ein Flussdiagramm eines Ausführungsbeispiels eines Verfahren zum Lokalisieren von ICT-Endgeräten zum Erzeugen einer lokalen Arbeits- und Netzwerkumgebung in einer erweiterten Virtualität mit einem Computersystem gemäß der Erfindung;
Fig. 2 ein Flussdiagramm eines Ausführungsbeispiels eines Verfahrens zum Erzeugen und Übertragen einer Antwort auf ein Suchsignal für ICT-Endgeräte gemäß der Erfindung;
Fig. 3 eine Szenerie mit einem Computersystem, mehreren ICT-Endgeräten und einer Funk-Zugangsvorrichtung gemäß der Erfindung; und
Fig. 4 ein Beispiel einer erfindungsgemäß erzeugten virtuellen Darstellung der in Fig. 3 gezeigten Szenerie.

Im Folgenden können gleiche und/oder funktional gleiche Elemente mit den gleichen Bezugszeichen versehen sein.

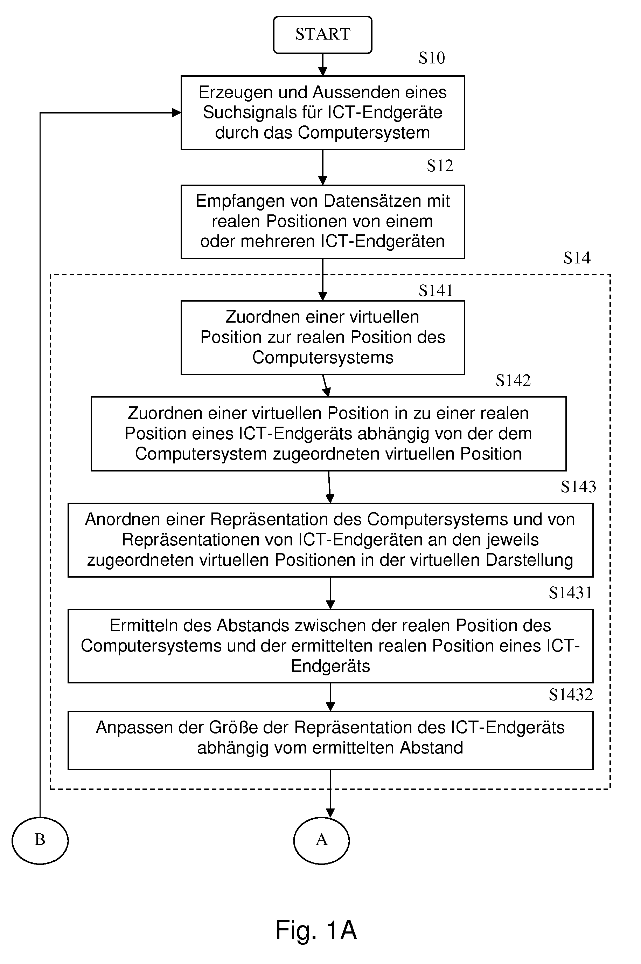

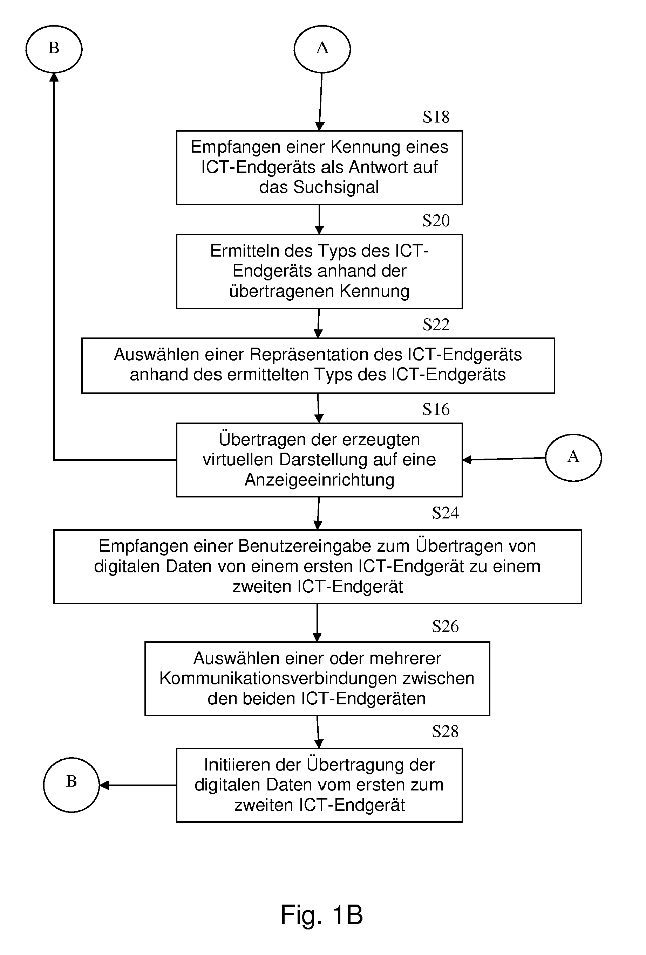

Fig. 1A und 1B zeigen ein Flussdiagramm eines Verfahrens zum Lokalisieren von ICT-Endgeräten zum Erzeugen einer lokalen Arbeits- und Netzwerkumgebung, wie es beispielsweise durch eine spezielle Software implementiert sein kann, insbesondere eine Betriebssystemerweiterung, welche die Netzwerkfunktionalität um das erfindungsgemäße Lokalisieren von ICT-Endgeräten und die GUI des Betriebssystems um die Anzeige der lokalen Arbeits- und Netzwerkumgebung in einer erweiterten Virtualität ergänzt. Das anhand des Flussdiagramms dargestellte Verfahren kann kontinuierlich in einer Schleife ausgeführt werden, wie es in der folgenden Beschreibung erläutert wird. Das erfindungsgemäße Verfahren kann in nahezu Echtzeit ausgeführt werden, so dass die dadurch erzeugte Anzeige der lokalen Arbeits- und Netzwerkumgebung in einer erweiterten Virtualität aktuell gehalten wird, d.h. neu lokalisierte ICT-Endgeräte umgehend ohne größere zeitliche Verzögerungen in der erweiterten Virtualität dargestellt werden und insbesondere auch Drehungen von bereits lokalisierten Endgeräten im Raum in der erweiterten Virtualität in nahezu Echtzeit gezeigt werden, vor allem eine Drehung des ICT-Endgeräts, welches das erfindungsgemäße Verfahren ausführt und die erweiterte Virtualität erzeugt. Bei der Erläuterung wird auf die Fig. 1A, 1B, 2, 3 und 4 Bezug genommen.

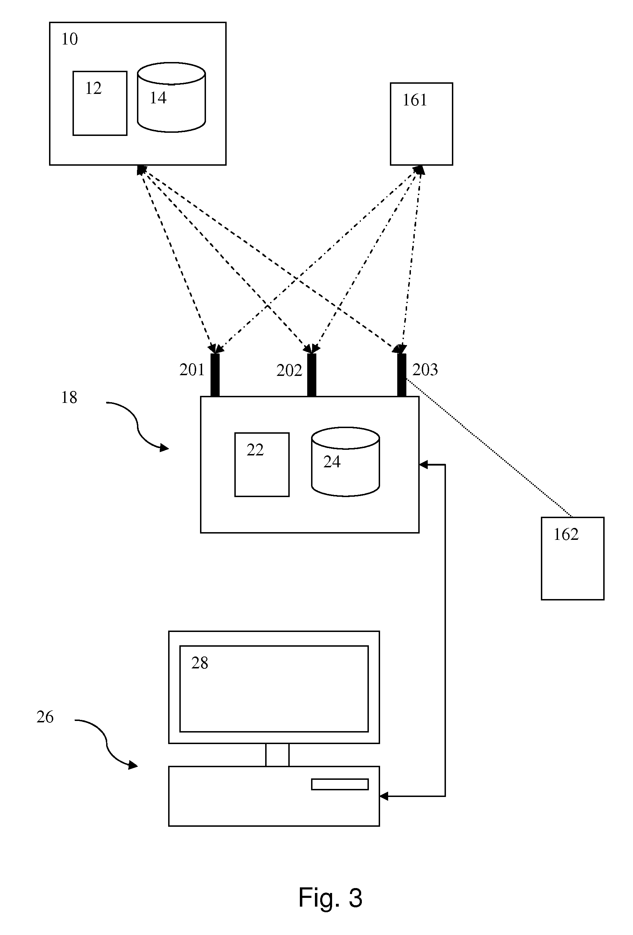

Fig. 3 zeigt eine beispielhafte Szenerie eines Netzwerks mit einem Computersystem 26, welches das erfindungsgemäße Verfahren zum Lokalisieren von ICT-Endgeräten 10, 161, 162 und 18 ausführt und einen Bildschirm 28 zum Darstellen einer auf Basis der Lokalisierung erzeugten virtuellen Darstellung aufweist. Das System 26 ist per LAN-Kabel mit einem Drahtlos-Router 18 verbunden, der einen Prozessor 22 und Speicher 24 aufweist, in dem ein Router-Betriebssystem als Firmware gespeichert ist, die vom Prozessor 22 ausgeführt ist. Der Router 18 weist ferner drei Antennen 201, 202 und 203 für Funkverbindungen zu ICT-Endgeräten 10, 161 und 162 auf. Das ICT-Endgerät 10, beispielsweise ein Smartphone mit Funkmodul, weist einen Prozessor 12 und Speicher 14 auf, in dem ein vom Prozessor auszuführendes Betriebssystem als Firmware gespeichert ist. Das Betriebssystem des Drahtlos-Routers 18 kann ausgebildet sein, die reale Position der ICT-Endgeräte 10, 161 und 162 durch Abschätzung der Entfernungen zwischen den Antennen 201, 202, 203 und den ICT-Endgeräten 10, 161, 162 anhand der Empfangsfeldstärke und durch Triangulation zu ermitteln und in Form einer Datenbank mit Datensätzen realer Positionen der ICT-Endgeräte 10, 161 und 162 im Speicher 24 abzulegen. Diese Datenbank kann vom Computersystem abgefragt werden, wie im Folgenden noch erläutert wird. Die realen Positionen sind hierbei relative Positionen der ICT-Endgeräte 10, 161 und 162 in Bezug auf die reale Position des Routers 18, die entweder bekannt und im Router 18 gespeichert sein kann, oder vom Router 18 selbst ermittelt werden kann, beispielsweise durch ein eingebautes aGPS-Modul.

In einem ersten Schritt S10 des Verfahrens wird ein Suchsignal für ICT-Endgeräte erzeugt, beispielsweise in Form eines "device discovery signal", das über eine drahtgebundene oder drahtlose Schnittstelle, beispielsweise ein LAN-, WLAN-, Bluetooth®-Modul, ausgesendet wird. Das Suchsignal kann vom Computersystem 26 und/oder vom Drahtlos-Router 18 erzeugt und ausgesendet werden. Das Suchsignal kann insbesondere in Form eines speziellen Protokolls ähnlich wie die eingangs erläuterten Protokolle LLDP oder LLTD ausgesendet werden.

Ein ICT-Endgerät kann auf dieses Suchsignal antworten, indem es an das Computersystem, welches des Suchsignal ausgesendet hat, einen Datensatz mit seiner realen Position übermittelt. Hierzu muss das ICT-Endgerät das Suchsignal empfangen und interpretieren können, indem es die gleiche Schnittstelle aufweist, über die das Suchsignal versendet wurde, und indem es softwaremäßig derart eingerichtet ist, dass es das Suchsignal versteht und darauf entsprechend antwortet. Beispielsweise kann ein Tablet-Computer oder ein Smartphone als ICT-Endgerät eine Applikation ausführen, die über eine Bluetooth® oder WLAN-Schnittstelle empfangene Daten darauf untersucht, ob ein Suchsignal enthalten ist, und, falls ein Suchsignal in den empfangenen Daten gefunden wird, seine reale Position mittels aGPS bestimmt oder gespeicherte Daten zu seiner realen Position liest und mit einem Antwortsignal über die Schnittstelle an das Computersystem zurücksendet, über die es das Suchsignal erhalten hat.

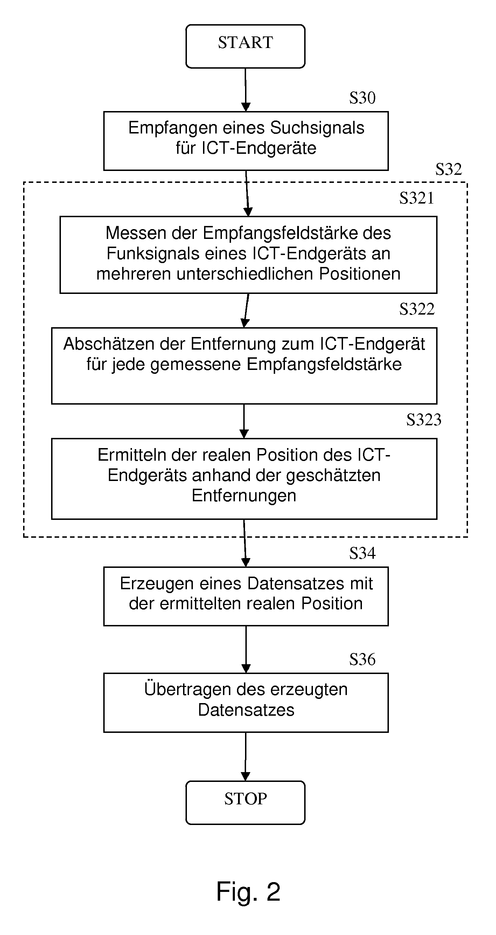

Fig. 2 zeigt ein Flussdiagramm eines Verfahrens zum Antworten auf ein empfangenes Suchsignal, wie es beispielsweise im Router 18 implementiert sein kann. Nach dem Empfangen des Suchsignals vom Computersystem 26 durch den Router 18 im Schritt S30, beginnt der Router 18 damit, die reale (relative) Position jedes mit ihm über Funk kommunizierenden ICT-Endgeräts 10, 161 und 162 zu ermitteln (Schritt S32). Hierzu misst der Router 18 zunächst im Schritt S321 für jedes von einem ICT-Endgerät empfangene Funksignal die Empfangsfeldstärke an jeder seiner drei Antennen 201, 202 und 203, also an unterschiedlichen Positionen im Raum. Dann schätzt der Router im Schritt S322 für jede gemessene Empfangsfeldstärke die Entfernung zum ICT-Endgerät und erhält somit drei geschätzte Entfernungen für eine Funkverbindung mit einem ICT-Endgerät. Im Schritt S323 ermittelt schließlich der Router 18 anhand der drei geschätzten Entfernungen die ungefähre reale (relative) Position des entsprechenden ICT-Endgeräts. Daraus erzeugt der Router 18 einen Datensatz mit der realen Position des entsprechenden ICT-Endgeräts und speichert und/oder überträgt den so erzeugten Datensatz an das Computersystem 26. Mit diesem Verfahren erzeugt der Router 18 für jedes mit ihm verbundene ICT-Endgerät 10, 161 und 162 eine entsprechenden Datensatz, den er an das Computersystem 26 übermittelt.

Diese Datensätze mit realen Positionen der ICT-Endgeräte 10, 161 und 162 und ggf. weitere Datensätze anderer nicht dargestellter ICT-Endgeräte die nicht mit dem Router 18 verbunden sind, empfängt das Computersystem im Schritt S12. Ein empfangener Datensatz mit einer realen Position eines ICT-Endgeräts enthält wie oben erläutert Daten zur realen Position und kann insbesondere Koordinaten eines Koordinatensystems, und Angaben zum Koordinatensystem enthalten, beispielsweise mittels AGPS vom ICT-Endgerät bestimmte Koordinaten und die Angabe GPS. Wie im Zusammenhang mit dem Router 18 oben erläutert kann die reale Position auch eine relative Position in Bezug auf einen Referenzpunkt wie den Router 18 sein. Als Angabe zum Koordinatensystem kann in diesem Fall der Referenzpunkt genannt werden, also beispielweise der Router 18, dessen Position dem Computersystem 26 bekannt ist.

Im folgenden Schritt S14 wird anhand der empfangenen Datensätze eine virtuelle Darstellung der lokalen Arbeits- und Netzwerkumgebung erzeugt. Eine virtuelle Darstellung 30 der in Fig. 3 gezeigten Szenerie in beispielhaft in Fig, 4 gezeigt. Zunächst wird im Schritt S141 der realen Position des Computersystems 26, das das Suchsignal im Schritt S10 ausgesendet hat, eine virtuelle Position in der zweidimensionalen virtuellen Darstellung zugeordnet, beispielsweise eine zentrale Position in der zweidimensionalen virtuellen Darstellung 30. Dann wird im Schritt S142 für jedes ICT-Endgerät 10, 161 und 162, von dem ein Datensatz empfangen wurde, der jeweiligen realen Position eine virtuelle Position zugeordnet. Die virtuelle Position wird hierbei in Bezug auf die dem Computersystem 26 zugeordnete virtuelle Position derart gewählt, dass die Anordnung des entsprechenden ICT-Endgeräts 10, 161 bzw. 162 etwa der Anordnung in der Realität entspricht, so dass ein Nutzer des Computersystems 26 beim Betrachten der virtuellen Darstellung erkennen kann, wo sich etwa ein ICT-Endgerät relativ zu seiner Position befindet. Im Schritt S143 werden dann Repräsentationen von ICT-Endgeräten 10, 161, 162 und des Computersystems 26 in der virtuellen Darstellung 30 angeordnet. Weiterhin werden im Schritt S1431 die Abstände zwischen der realen Position des Computersystems und ermittelten realen Positionen der ICT-Endgeräte ermittelt und im Schritt S1432 die Größen der Repräsentationen der ICT-Endgeräte abhängig von den ermittelten Abständen angepasst. Hierbei wird die Repräsentation eines sich näher am Computersystem befindlichen ICT-Endgeräts 162 größer als die eines weiter entfernten ICT-Endgeräts 10, 161 gewählt, so dass ein Nutzer in der virtuellen Darstellung 30 anhand der Größe der Repräsentationen schnell erkennen kann, wie nahe sich ein ICT-Endgerät an seiner Position befindet. Die so erzeugte virtuelle Darstellung 30 kann im Prinzip bereits auf einer Anzeige, d.h. einem Bildschirm 28 des Computersystems 26 wiedergegeben werden, siehe Schritt S16. Bei einem Betriebssystem mit GUI kann die Erzeugung der virtuellen Darstellung entsprechend dem bisher erläuterten Verfahrensablauf auf dem Bildschirm des Computersystems gezeigt werden, so dass ein Nutzer über den Fortschritt des Aufbaus der virtuellen Darstellung fortlaufend informiert ist.

Mit dem folgenden Verfahrensablauf kann ferner eine geeignete Repräsentation eines ICT-Endgeräts in Form eines passenden Symbols für die virtuelle Darstellung ausgewählt werden: In einem Schritt S18 des Verfahrens kann auf das Suchsignal als Antwort auch eine Kennung eines ICT-Endgeräts empfangen werden, insbesondere zusammen mit dem Datensatz mit der realen Position. Die Kennung kann beispielsweise Daten zum ICT-Endgerät enthalten, die einen Rückschluss auf den Typ des ICT-Endgeräts zulassen. Im Schritt S20 kann anhand der Kennung der Typ ermittelt werden, beispielsweise Laptop, Tablet-PC, Smartphone, Netzwerk-Projektor, Server. Im Falle eines Netzwerk-Projektors kann zusätzlich mit der Kennung auch ein geräteabhängiger Korrekturfaktor übermittelt werden, der es ermöglicht, optimal die Position einer Projektionsfläche anstatt der Position des Projektors selbst virtuell anzuzeigen. Weiterhin kann für jedes ICT-Endgerät ein weiterer Parameter übermittelt werden, der dem Nutzer optional zeigt, in welcher Lage bzw Ausrichtung sich ein Endgerät befindet. Damit kann z.B. die Aufnahmerichtung einer Webkamera oder die Anzeigerichtung eines Bildschirms in die virtuelle Darstellung eingefügt werden, so dass sich ein Nutzer noch leichter orientieren kann. Entsprechend dem ermittelten Typ kann dann im Schritt S22 eine entsprechende Repräsentation des ICT-Endgeräts ausgewählt werden, beispielsweise ein Symbol für einen Laptop, Tablet-PC, Smartphone, Netzwerk-Projektor, Server. Ebenso kann eine passende Bezeichnung für ein ICT-Endgerät anhand der Kennung ermittelt und in der virtuellen Darstellung verwendet werden.

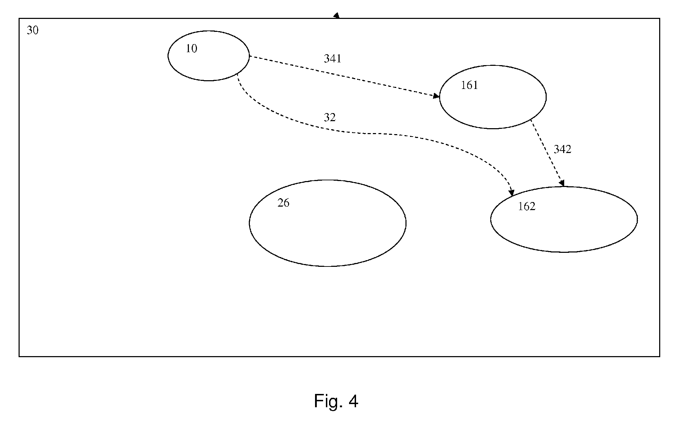

Nach dem Erzeugen der virtuellen Darstellung kann diese für Benutzereingaben verwendet werden, wie anhand der Verfahrensschritte S24-S28 beispielhaft erläutert werden soll. Ein Benutzer kann zur Übertragung von Daten zwischen zwei ICT-Endgeräten 10 und 162 Daten vom Gerät 10 durch eine Drag and Drop Bedienung auf das Gerät 162 in der virtuellen Darstellung 20 ziehen (gekennzeichnet durch die gestrichelte Linie 32). Diese Benutzereingabe wird im Schritt S24 vom Computersystem 26 empfangen. Im nächsten Schritt S26 wählt das Computersystem 26 automatisch eine geeignete Kommunikationsverbindung für die Übertragung aus, im in Fig. 4 dargestellten Beispiel eine aus zwei Verbindungen 341 und 342 bestehende Kommunikationsverbindung über das Gerät 161. Anschließend initiiert das Computersystem 26 die Übertragung der Daten vom Gerät 10 zum Gerät 162 über das Gerät 161 als Zwischenstation, indem es eine die zwei Verbindungen 341 und 342 enthaltende Route an das sendende Gerät 10 übermittelt, das daraufhin die Übertragung startet.

Die Erfindung ermöglicht durch die Lokalisierung von ICT-Endgeräten eine Darstellung einer lokalen Arbeits- und Netzwerkumgebung in Form einer augmented Virtuality. Diese Art der Darstellung einer lokalen Abeits- und Netzwerkumgebung ermöglicht eine einfache Interaktion zwischen ICT-Endgeräten, da die Übersicht und Zuordnung von ICT-Endgeräten verbessert bzw. erleichtert wird. Hierdurch können Programme, welche diese virtuelle Darstellung nutzen, intuitiver bedient werden. Weiterhin muss keine aufwendige Authentisierung eines ICT-Endgeräts durch ein anderes ICT-Endgerät durchgeführt werden, da beispielsweise ein Nutzer ein in der virtuellen Darstellung angezeigtes ICT-Endgerät einer Person im Raum zuordnen kann, ohne die Person oder eine Kennung des Geräts zu kennen.

Ein denkbare Anwendung der erfindungsgemäß erzeugten virtuellen Anzeige wäre das Verschieben von Dateien wie Fotos und Dokumenten in einem Netzwerk durch das Ziehen von Elementen von einer Repräsentation eines ICT-Endgeräts auf die Repräsentation eines anderen ICT-Endgeräts (Drag and Drop) innerhalb der virtuellen Darstellung. Beispielsweise kann ein Nutzer anhand der virtuellen Darstellung eine Präsentationsdatei von seinem Laptop auf einem Netzwerk-Projektor ziehen, der sich in einem Nebenraum befindet, indem der Nutzer den Netzwerk-Projektor anhand seiner Position in der virtuellen Darstellung und seiner Repräsentationssymbol auswählt.

Vorstellbar sind auch lokale "Micro-Communities", die ein "Social Networking" durch den Austausch von Kontaktdaten ermöglichen. Beispielsweise kann bei einer Party ein Nutzer auf seinem Smartphone über ein Ad-Hoc Netzwerk ICT-Endgeräte in seiner Umgebung in einer virtuellen Darstellung anzeigen lassen und ohne Kenntnis des Besitzers und einer Kennung eines bestimmten ICT-Endgeräts seine digitalen Kontaktdaten an den Besitzer dieses ICT-Endgeräts übermitteln. Durch die erfindungsgemäß erzeugte virtuelle Darstellung können Teilnehmer in einem Ram leicht lokalisiert und identifiziert werden.

Ein weiteres denkbares Einsatzgebiet der Erfindung wäre ein virtueller Klassenraum, bei dem ein Lehrer auf verschiedenen Projektoren, Bildschirmen und Schüler-Laptops Lehrmaterialien verteilt.

An weiteres Szenario wäre auch das Betreten eines vernetzten Raumes wie beispielsweise eines Hotelzimmers. Der Nutzer sieht ein TV-Gerät an der Wand hängen, schaut auf sein ICT-Endgerät, auf dem eine erfindungsgemäß erzeugte virtuelle Darstellung gezeigt wird, und lokalisiert in der virtuellen Darstellung das TV-Gerät. Mit einem Fingerzeig kann der Nutzer nun auf einem berührungsempfindlichen Bildschirm seines ICT-Endgeräts seine eben aufgenommenen Urlaubsfotos auf das TV-Gerät in der virtuellen Darstellung ziehen. Die Bilder werden dann sofort vom TV-Gerät angezeigt. Ebenso kann der Nutzer seine Fotos auf einen digitalen Bilderrahmen übertragen. Gerade bei mehreren ICT-Endgeräten in einem Raum wird der Vorteil der erfindungsgemäß erzeugten virtuellen Darstellung deutlich, da ein Nutzer leicht das als Ziel gewünschte ICT-Endgerät lokalisieren kann, beispielsweise bei mehreren in einem Haus verteilten digitalen Bilderrahmen.

### Bezugszeichen und Glossar

- 10: ICT-Endgerät
- 12: Prozessor
- 14: Speicher
- 161, 162: ICT-Endgeräte
- 18: Drahtlos-Router
- 201, 202, 203: Antennen des Drahtlos-Routers
- 22: Prozessor
- 24: Speicher
- 26: Computersystem
- 28: Bildschirm
- 30: virtuelle Darstellung der lokalen Arbeits- und Netzwerkumgebung
- 32: Drag-and-Drop-Bedienung
- 341, 342: Kommunikationsverbindungen zwischen den ICT-Endgeräten in der virtuellen Darstellung

- aGPS: assisted Global Positioning System
- CDMA: Code Division Multiple Access
- DSL: Digital subscriber Line
- GNSS: Global Navigation Satellite System
- GSM: Global System for Mobile Communication
- GUI: Graphical User Interface
- IAD: Internet Access Device
- ICT: Information & Communication Technology
- ISOC: Internet Society
- LAN: Local Area Network
- LLDP: Link Layer Discovery Protocol
- LLTD: Link Layer Topology Discovery
- PDA: Personal Digital Assistant
- RFID: Radio Frequency Identification
- SNMP: Simple Network Management Protocol
- UMTS: Universal Mobile Telecommunication System
- WLAN: Wireless LAN

## Patentansprüche

1. Verfahren zum Lokalisieren von ICT-Endgeräten zum Erzeugen einer lokalen Arbeits- und Netzwerkumgebung in einer erweiterten Virtualität mit einem Computersystem mit den Schritten:
• Erzeugen und Aussenden eines Suchsignals für ICT-Endgeräte (S10);
• Empfangen von Datensätzen mit realen Positionen von einem oder mehreren ICT-Endgeräten als Antwort auf das Suchsignal (S12),
• Erzeugen einer virtuellen Darstellung einer lokalen Arbeits- und Netzwerkumgebung durch Anordnen von Repräsentationen der ICT-Endgeräte entsprechend ihrer realen Positionen in der virtuellen Darstellung (S14) und
• Übertragen der erzeugten virtuellen Darstellung auf eine mit dem Computersystem verbundene Anzeigeeinrichtung zum Darstellen (S16).

2. Verfahren nach Anspruch 1,
**dadurch gekennzeichnet, dass**
das Anordnen von Repräsentationen der ICT-Endgeräte entsprechend ihrer realen Positionen (S14) folgende Schritte aufweist:
• Zuordnen einer virtuellen Position in der virtuellen Darstellung der lokalen Arbeits- und Netzwerkumgebung zur realen Position des Computersystems (S141),
• Zuordnen einer virtuellen Position in der virtuellen Darstellung einer lokalen Arbeits- und Netzwerkumgebung zu einer realen Position eines ICT-Endgeräts abhängig von der dem Computersystem zugeordneten virtuellen Position (S142) und
• Anordnen einer Repräsentation des Computersystems und von Repräsentationen von ICT-Endgeräten an den jeweils zugeordneten virtuellen Positionen in der virtuellen Darstellung der lokalen Arbeits- und Netzwerkumgebung (S143).

3. Verfahren nach Anspruch 1 oder 2,
**dadurch gekennzeichnet, dass**
das Anordnen von Repräsentationen der ICT-Endgeräte an ihren jeweils zugeordneten virtuellen Positionen (S143) ferner folgende Schritte aufweist:
• Ermitteln des Abstands zwischen der realen Position des Computersystems und der ermittelten realen Position eines ICT-Endgeräts (S1431) und
• Anpassen der Größe der Repräsentation des ICT-Endgeräts abhängig vom ermittelten Abstand (S1432).

4. Verfahren nach einem der Ansprüche 1 bis 3,
ferner **gekennzeichnet durch** folgende Schritte:
• Empfangen einer Kennung eines ICT-Endgeräts als Antwort auf das Suchsignal **durch** das Computersystem (S18),
• Ermitteln des Typs des ICT-Endgeräts anhand der übertragenen Kennung (S20) und
• Auswählen einer Repräsentation des ICT-Endgeräts in der virtuellen Darstellung der lokalen Arbeits- und Netzwerkumgebung anhand des ermittelten Typs des ICT-Endgeräts (S22).

5. Verfahren nach einem der vorhergehenden Ansprüche,
ferner **gekennzeichnet durch** die folgenden Schritte:
• Empfangen einer Benutzereingabe zum Übertragen von digitalen Daten von einem ersten ICT-Endgerät zu einem zweiten ICT-Endgerät **durch** Auswählen des ersten ICT-Endgeräts und des zweiten ICT-Endgeräts in der virtuellen Darstellung der lokalen Arbeits- und Netzwerkumgebung (S24),
• Auswählen einer oder mehrerer Kommunikationsverbindungen zwischen den beiden ICT-Endgeräten zur Übertragung der digitalen Daten anhand der virtuellen Darstellung (S26) und
• Initiieren der Übertragung der digitalen Daten vom ersten zum zweiten ICT-Endgerät **durch** Signalisieren der ausgewählten Kommunikationsverbindungen (S28).

6. Verfahren zum Erzeugen und Übertragen einer Antwort auf ein Suchsignal für ICT-Endgeräte, das von einem Computersystem erzeugt und ausgesendet wurde, das ein Verfahren nach einem der vorhergehenden Ansprüche ausführt, **gekennzeichnet durch** die folgenden Schritte:
• Empfangen eines Suchsignals für ICT-Endgeräte (S30),
• Ermitteln der realen Position eines ICT-Endgeräts (S32),
• Erzeugen eines Datensatzes mit der ermittelten realen Position (S34) und
• Übertragen des erzeugten Datensatzes als Antwort auf das Suchsignal für ICT-Endgeräte (S36).

7. Verfahren nach Anspruch 6,
**dadurch gekennzeichnet, dass**
das Ermitteln der realen Position eines ICT-Endgeräts (S32) folgende Schritte aufweist:
• Messen der Empfangsfeldstärke des Funksignals eines ICT-Endgeräts an mehreren unterschiedlichen Positionen in einem Raum (S321),
• Abschätzen der Entfernung zum ICT-Endgerät für jede gemessene Empfangsfeldstärke (S322) und
• Ermitteln der realen Position des ICT-Endgeräts anhand der geschätzten Entfernungen (S323).

8. Computerprogramm mit Programmcode zur Durchführung der Schritte eines Verfahrens gemäß einem der Ansprüche 1 bis 7, wenn das Computerprogramm auf einem Computer, insbesondere einem ICT-Endgerät, abläuft.

9. Computerprogramm-Produkt, umfassend einen maschinenlesbaren Datenträger, auf dem ein Computerprogramm nach Anspruch 9 in Form von elektronisch oder optisch auslesbaren Steuersignalen für einen Computer, insbesondere ein ICT-Endgerät, gespeichert ist.

10. ICT-Endgerät (10), insbesondere Laptop, Notebook, Smartphone oder Tablet-PC, mit
• einem Prozessor (12),
• einem Speicher (14),
• einem Computerprogramm, das zum Ausführen durch den Prozessor im Speicher gespeichert ist und ein Verfahren nach einem der Ansprüche 1-7 implementiert.

11. Funk-Zugangsvorrichtung (18) für ICT-Endgeräte zu einem Netzwerk mit
• mehreren Antennen (201, 202, 203) zum Kommunizieren mit ICT-Endgeräten per Funkverbindung,
• einem Prozessor (22),
• einem Speicher (24), und
• einem Computerprogramm, das zum Ausführen durch den Prozessor im Speicher gespeichert ist und folgende Schritte implementiert:
• Messen der Empfangsfeldstärke eines Funksignals von einem mit der Funk-Zugangsvorrichtung kommunizierenden ICT-Endgerät mit den Antennen,
• Abschätzen der Entfernung zum ICT-Endgerät für jede gemessene Empfangsfeldstärke,
• Ermitteln der realen Position des ICT-Endgeräts anhand der geschätzten Entfernungen, und
• Übermitteln der ermittelten realen Position des ICT-Endgeräts als Antwort auf ein Suchsignal für ICT-Endgeräte, das von einem Computersystem empfangen wurde, das zum Ausführen eines Verfahrens nach einem der Ansprüche 1 bis 5 eingerichtet ist.
